(19) **Europäisches Patentamt**

**European Patent Office**

**Office européen des brevets**

(11) **EP 1 224 749 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(21) Anmeldenummer: **00981153.0**

(22) Anmeldetag: **24.10.2000**

(51) Int Cl.⁷: **H04B 7/08**, H04B 7/06

(86) Internationale Anmeldenummer:
**PCT/DE00/03755**

(87) Internationale Veröffentlichungsnummer:
**WO 01/031812 (03.05.2001 Gazette 2001/18)**

(54) **STRAHLFORMUNG IN EINEM FUNK-KOMMUNIKATIONSSYSTEM**

BEAM FORMING IN A RADIO-COMMUNICATIONS SYSTEM

FORMATION D'UN FAISCEAU DANS UN SYSTEME DE COMMUNICATION RADIO

(84) Benannte Vertragsstaaten:
**DE FR GB IT**

(30) Priorität: **26.10.1999 DE 19951524**

(43) Veröffentlichungstag der Anmeldung:
**24.07.2002 Patentblatt 2002/30**

(73) Patentinhaber: **SIEMENS AKTIENGESELLSCHAFT**
**80333 München (DE)**

(72) Erfinder:
 • **ALI-HACKL, Markus**
 **82110 Germering (DE)**
 • **BRUNNER, Christopher**
 **54516 Wittlich (DE)**
 • **DILLINGER, Markus**
 **81737 München (DE)**
 • **HAARDT, Martin**
 **81477 München (DE)**
 • **SEEGER, Alexander**
 **85622 Feldkirchen (DE)**

(56) Entgegenhaltungen:
 **DE-A- 19 803 188**

 • **BRUNNER ET AL: "Adaptive space-frequency RAKE receivers for WCDMA" PHOENIX, AZ, MARCH 15 - 19, 1999,NEW YORK, NY: IEEE,US, 1999, Seiten 2383-2386, XP002138682 ISBN: 0-7803-5042-1**
 • **BRUNNER C ET AL: "On space-time RAKE receiver structures for WCDMA" CONFERENCE RECORD OF THE THIRTY-THIRD ASILOMAR CONFERENCE ON SIGNALS, SYSTEMS, AND COMPUTERS (CAT. NO.CH37020), PROCEEDINGS OF 1999 ASILOMAR CONFERENCE, PACIFIC GROVE, CA, USA, 24-27 OCT. 1999, Seiten 1546-1551 vol.2, XP002163687 1999, Piscataway, NJ, USA, IEEE, USA ISBN: 0-7803-5700-0**
 • **BRUNNER C ET AL: "Low complexity space-frequency RAKE receivers for WCDMA" IEEE ANTENNAS AND PROPAGATION SOCIETY INTERNATIONAL SYMPOSIUM. 1999 DIGEST. HELD IN CONJUNCTION WITH: USNC/URSI NATIONAL RADIO SCIENCE MEETING (CAT. NO.99CH37010), IEEE ANTENNAS AND PROPAGATION SOCIETY INTERNATIONAL SYMPOSIUM. 1999 DIGEST, ORLANDO, F, Seiten 1104-1107 vol.2, XP002163688 1999, Piscataway, NJ, USA, IEEE, USA ISBN: 0-7803-5639-X**

**Beschreibung**

Die Erfindung betrifft ein Verfahren zur Strahlformung in einem Funk-Kommunikationssystem mit einer Basisstation, deren zugeordnete Antenneneinrichtung mehrere Antennenelemente aufweist, so daß eine räumliche Auflösung bei der Strahlformung möglich ist.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung erfolgt sowohl in Abwärtsrichtung (downlink) von der Basisstation zu der Teilnehmerstation, als auch in Aufwärtsrichtung (uplink) von der Teilnehmerstation zur Basisstation.

Signale, die mit den elektromagnetischen Wellen übertragen werden, unterliegen bei ihrer Ausbreitung in einem Ausbreitungsmedium u.a. Störungen durch Interferenzen. Störungen durch Rauschen können u.a. durch Rauschen der Eingangsstufe des Empfängers entstehen. Durch Beugungen und Reflexionen durchlaufen Signalkomponenten verschiedene Ausbreitungswege und überlagern sich beim Empfänger und führen dort zu Auslöschungseffekten. Zum weiteren kommt es bei mehreren Signalquellen zu Überlagerungen dieser Signale. Die Signalquellen können Teilnehmerstationen oder die Basisstation innerhalb einer zugehörigen Funkzelle der Basisstation oder Teilnehmerstationen bzw. Basisstationen weiterer, beispielsweise benachbarter Funkzellen sein.

Aus DE 198 10 285.2 A ist bekannt, daß zur Unterscheidung der Signalquellen und damit zur Auswertung der Signale als Frequenzmultiplex (FDMA), Zeitlagenmultiplex (TDMA) oder Codemultiplex (CDMA) bekannte Verfahren dienen, die auch miteinander kombiniert werden können. Das gegenwärtig existierende GSM-Mobilfunksystem ist ein Funk-Kommunikationssystem mit einer TDMA- und einer FDMA-Komponente zur Teilnehmerseparierung (Time Division Multiple Access). Gemäß einer Rahmenstruktur werden Nutzinformationen der Teilnehmerverbindungen in Zeitschlitzen übertragen. Die Übertragung erfolgt blockweise.

Aus DE 197 12 549 A1 ist bekannt, intelligente Antennen (smart antennas) zu nutzen, um die Übertragungskapazität in Aufwärtsrichtung zu erhöhen.

Aus A.J.Paulraj, C.B.Papadias, "Space-time processing for wireless communications", IEEE Signal Processing Magazin, Nov. 1997, S.49-83, sind verschiedene Verfahren zur räumlichen Signaltrennung für Auf- und Abwärtsrichtung bekannt.

Für die Abwärtsrichtung, also von Basisstation zur Teilnehmerstation treten besondere Schwierigkeiten auf, da die Strahlformung vor der Beeinflussung der übertragenen Signale durch den Funkkanal vorzunehmen ist. Aus R. Schmalenberger, J.J. Blanz, "A comparison of two different algorithms for multi antenna C/I balancing", Proc. 2nd European Personal Mobile Communications Conference (EPMCC), Bonn, Germany, Sept. 1997, S.483-490, ist ein Algorithmus der Strahlformung in Abwärtsrichtung bekannt, wobei ein direkter Ausbreitungspfad (Sichtverbindung) zwischen den Basisstationen und den Teilnehmerstationen und eine iterative Berechnung von Strahlformungsvektoren vorausgesetzt werden. Mit jeder Änderung der Eigenschaften des Übertragungskanals muß die gesamte aufwendige iterative Berechnung wiederholt werden.

Aus DE 198 03 188 A ist ein Verfahren bekannt, wobei räumliche Kovarianzmatrizen für eine Verbindung von einer Basisstation zu einer Teilnehmerstation bestimmt werden. In der Basisstation wird aus den Kovarianzmatrizen für die Verbindung ein Strahlformungsvektor berechnet. Die Sendesignale für die Verbindung werden mit dem Strahlformungsvektor gewichtet und Antennenelementen zur Abstrahlung zugeführt. Intrazell-Interferenzen werden aufgrund der Verwendung von Joint-Detection, beispielsweise in den Endgeräten, in die Strahlformung nicht einbezogen und eine Verfälschung der empfangenen Signale durch Interzell-Interferenzen wird vernachlässigt.

Der Erfindung liegt die Aufgabe zugrunde, ein verbessertes Verfahren zur Datenübertragung anzugeben, bei dem die Effizienz der Strahlformung verbessert wird.

Diese Aufgabe wird durch das erfindungsgemäße Verfahren mit den Merkmalen des Patentanspruchs 1 gelöst. Weiterbildungen der Erfindung sind den Unteransprüchen zu entnehmen.

Das erfindungsgemäße Verfahren zur Datenübertragung wird in einem Funk-Kommunikationssystem mit einer Basisstation und Teilnehmerstationen eingesetzt. Die Teilnehmerstationen sind beispielsweise Mobilstationen, so in einem Mobilfunknetz, oder Feststationen, so in sogenannten Teilnehmerzugangs-Netzen zum drahtlosen Teilnehmeranschluß. Die Basisstation weist eine Antenneneinrichtung (smart antenna) mit mehreren Antennenelementen auf. Die Antennenelemente ermöglichen einen gerichteten Empfang bzw. eine gerichtete Sendung von Daten über die Funkschnittstelle.

In einem ersten Schritt werden Orthogonalitätsfaktoren von interferierenden Signalen weiterer Teilnehmerstationen zu Signalen einer k-ten Verbindung von der Basisstation zu einer Teilnehmerstation bestimmt. Stehen in einer Funkzelle mehrere Teilnehmerstationen mit der Basisstation in einer Kommunikationsbeziehung, so werden die Signale der k-ten Verbindung von der Basisstation zu der Teilnehmerstation von den Signalen zu den weiteren Teilnehmerstationen gestört. Die störenden, in Abwärtsrichtung übertragenen Signale führen zur Intrazell-Interferenz für die k-te Verbindung.

Die Stärke der Störung ist unter anderem abhängig von der Orthogonalität zwischen den von der Teilnehmerstation empfangenen Nutz- und Störsignalen. Zur Bestimmung der Stärke der Störung wird der Orthogonalitätsfaktor für jedes mit den Signalen der k-ten Verbindung interferierende Signal der Basisstation bestimmt.

In einem zweiten Schritt des erfindungsgemäßen Verfahrens werden räumliche Kovarianzmatrizen für die k-te Verbindung bzw. für die weiteren Teilnehmerstationen bestimmt. In der Basisstation werden die Kovarianzmatrizen der k-ten Verbindung und die der weiteren Teilnehmerstationen gemeinsam ausgewertet, daß die Strahlformungsvektoren für die Teilnehmerstationen optimal gesteuert werden können.

In einem dritten Schritt werden die räumlichen Kovarianzmatrizen für die weiteren Teilnehmerstationen mit den Orthogonalitätsfaktoren gewichtet. Durch die Gewichtung wird die Effizienz der Strahlformung wesentlich verbessert. Erreicht beispielsweise die Teilnehmerstation das Signal einer weiteren Verbindung welches zum Nutzsignal der Verbindung der Teilnehmerstation orthogonal ist, so ist der Orthogonalitätsfaktor gleich oder nahe null. Durch die Gewichtung der Kovarianzmatrix der störenden Verbindung wird die Sendekeule der störenden Verbindung beispielsweise so geformt, daß die Störungen in Richtung der Teilnehmerstation nicht unterdrückt werden. Dadurch werden beispielsweise die Störunterdrückung für andere Teilnehmerstationen verbessert, indem Freiheitsgrade eingespart werden.

Sind die Signale dagegen nicht orthogonal und der Orthogonalitätsfaktor nahe eins, wird durch die erfolgte Gewichtung der Kovarianzmatrix zur besseren Störunterdrückung eine Nullstelle der Sendekeule des Störsignals in Richtung der weiteren Teilnehmerstation von der Basisstation ausgerichtet.

In einem vierten Schritt des erfindungsgemäßen Verfahrens wird für die Verbindung ein Strahlformungsvektor $w^{(k)}$ aus den Kovarianzmatrizen berechnet.

In einem fünften Schritt des Verfahrens werden die Sendesignale für die Verbindung mit dem Strahlformungsvektor gewichtet und den Antennenelementen zugeführt und von den Antennenelementen abgestrahlt.

In einer Ausgestaltung wird der Orthogonalitätsfaktor mittels eines reservierten Spreizkodes ermittelt. Sind

$\alpha_k$: Orthogonalitätsfaktor,

$E_m$: Erwartung über mehrere Symbole,

$x_k(n)$: Abgetastetes Eingangssignal nach einer A/D Wandlung einer Chip-Filterung und einer elementweisen Multiplikation mit einer Verwürfelungssequenz (de-scrambling),

$c(n)$: reservierter Spreizkode mit beispielsweise 256 chips je Symbol,

m: eine Symbolnummer,

k: ist die Teilnehmerstation der k-ten Verbindung,

N: eine Chipnummer, und

$\lambda$: ein Normierungsfaktor,

wird der Orthogonalitätsfaktor durch

$$\alpha_k = E_m \left\{ \sum_{l=1}^{256} x_k(n + 256 \cdot m) \cdot c(n) \right\} \cdot \lambda$$

bestimmt.

In einer anderen Ausgestaltung der Erfindung wird der Orthogonalitätsfaktor mittels mehrerer reservierter Spreizkodes oder gemeinsamer Detektion ermittelt. Alternativ zu der aufgezeigten Ausgestaltung einer linearen Abhängigkeit ist beispielsweise auch eine quadratische oder exponentielle Abhängigkeit möglich. In einer vorteilhaften Ausgestaltung der Erfindung ist der Wertbereich des Orthogonalitätsfaktors zwischen 0 und 1 begrenzt. Der Normierungfaktor ist beispielsweise von der Basisstation konfigurierbar um vergleichbare Werte der einzelnen Teilnehmerstationen zu erhalten. In einer weiteren Ausgestaltung ist der Orthogonalitätsfaktor von weiteren Kenngrößen, beispielsweise der Interzell-Interferenz oder der Signallaufzeit abhängig.

In einer vorteilhaften Ausgestaltung der Erfindung wird aus den mit den Orthogonalitätsfaktoren gewichteten Kovarianzmatrizen eine resultierende Kovarianzmatrix ($R_l$) der interferierenden Signale nach

$$R_I^{(k)} = \sum_{i=1, i \neq k}^{n} \alpha_{k,i} \cdot R_{xx}^{(i)}$$

bestimmt. In dieser Ausgestaltung ist die Gewichtung durch den Orthogonalitätsfaktor linear verknüpft. Alternativ ist auch eine andere, beispielsweise quadratische Verknüpfung denkbar, wodurch die erfindungsgemäße Lösung optimiert werde kann.

Vorteilhafterweise wird zusätzlich mindestens ein Faktor für eine Interzell-Interferenz für die k-te Verbindung bestimmt und mit dem Faktor die Kovarianzmatrizen zusätzlich gewichtet. In einer günstige Ausgestaltung des erfindungsgemäßen Verfahrens wird hierzu das Verhältnis von Intrazell-Interferenz zur Interzell-Interferenz bestimmt. Während die Intra zell-Interferenz in Abhängigkeit von der Orthogonalität der Signale bestimmt wird, wird die Interzell-Interferenz über das vom Empfänger gemessene Grundrauschen bestimmt. Der Faktor ist somit um so größer, je größer das Verhältnis von Intrazell-Interferenz zur Interzell-Interferenz ist. Der Fakto für die Interzell-Interferenz wird vorteilhafterweise in den Orhogonalitätsfaktor einbezogen.

In einer vorteilhaften Ausgestaltung der Erfindung wird der Strahlformungsvektor $w^{(k)}$ derartig berechnet, daß die Beziehung

$$\left|\frac{w^{(k)H} R_{xx}^{(k)} w^{(k)}}{w^{(k)H} R_{I}^{(k)} w^{(k)}}\right|_{max}$$

maximiert wird. $H$ bezeichnet dabei einen transjugierten Vektor. $R_I$ ist eine resultierende Kovarianzmatrix der interferierenden Signale. Nach $R_{xx}^{(k)} w^{(k)} = R_I^{(k)} w^{(k)} \lambda_{max}^{(k)}$ wird der Strahlformungsvektor mit dem größten Eigenwert bestimmt. Durch dieses Verfahren wird die für die Verbindung k zur Verfügung stehende Leistung im Verhältnis zur Leistung der Interferenzen maximiert, wobei auf Iterationen verzichtet werden kann, da die Berechnung mit der Nebenbedingung $R_{xx}^{(k)} w^{(k)} = R_I^{(k)} w^{(k)} \lambda_{max}^{(k)}$ in einem Schritt zum gewünschten Ergebnis führt. Insbesondere bei Szenarios mit vielen Teilnehmern und stark schwankenden Kanalbedingungen wird die Strahlformung in Abwärtsrichtung wirtschaftlicher gestaltet.

In einer besonders vorteilhaften Ausgestaltung der Erfindung werden von mehreren Antennenelementen charakteristische Kodes gesendet. Durch die charakteristischen Kodes werden die Signale der einzelnen Antennenelemente empfangsseitig unterschieden. Die charakteristischen Kodes sind beispielsweise unterschiedliche Trainingssequenzen in einem Pilotkanal. Von den Teilnehmerstationen werden unter Auswertung der charakteristischen Kodes die Kovarianzmatrizen bestimmt. Insbesondere für FDD-Systemen mit unterschiedlichen Frequenzbändern für Abwärts- und Aufwärtrichtung ist eine Kanalschätzung der Abwärtsrichtung durch die Basisstation BS nur mit verminderter Genauigkeit möglich. Dagegen erfolgt mit dieser Ausgestaltung der Erfindung eine präzise Schätzung der Abwärtsrichtung und die Bestimmung der räumlichen Kovarianzmatrizen in den Teilnehmerstationen.

Vorteilhaft werden die räumliche Kovarianzmatix und die Orthogonalitätsfaktoren von der Teilnehmerstation an die Basisstation übertragen. Die Meßwerte werden vorteilhaft komprimiert und mit einer entsprechenden Signalisierung und entsprechenden Protokollen an die Basisstation BS übertragen. Die Übertragung erfolgt dabei ständig oder wird von der Basisstation BS konfiguriert und je nach Geschwindigkeit der Teilnehmerstation MS angepaßt. Auch ist eine Mittelung über mehrere Meßwerte denkbar, wenn sich die Teilnehmerstation MS entsprechend langsam bewegt.

In einer Ausgestaltung der Erfindung werden zusätzlich räumliche Kovarianzmatrizen in Aufwärtsrichtung dadurch bestimmt, daß die Bestimmung auf geschätzten Kanalimpulsantworten basiert, d.h. Kanalmessungen zusätzlich zur Gewinnung räumlicher Aussagen ausgewertet werden. Vorteilhafterweise werden die Kanalimpulsantworten aus von der Teilnehmerstation gesendeten Trainingssequenzen bestimmt. Die gesendeten Trainingssequenzen für eine oder mehrere Verbindungen sind in der empfangenden Basisstation bekannt, so daß zusätzlich Schätzwerte ermittelt werden können.

Erfolgt die Datenübertragung in Abwärts- und Aufwärtsrichtung im gleichen Frequenzband, werden vorteilhafterweise die räumlichen Kovarianzmatrizen der Verbindung für die Abwärtsrichtung aus Meßwerten der Aufwärtsrichtung bestimmt. Die in TDD (time division duplex) vorhandene Übereinstimmung von Sende- und Empfangsfrequenz wird damit zur zuverlässigen Bestimmung der räumlichen Kanalparameter benutzt.

In einer vorteilhaften Ausgestaltung der Erfindung werden von der Teilnehmerstation mehrere Kovarianzmatrizen bezogen auf die Finger eines Rake-Empfängers bestimmt. Damit wird beispielsweise eine getrennte Strahlformung für jeden Finger eines Rake-Empfängers ermöglicht, wodurch eine präzisere Interferenzunterdrückung möglich wird. Dies ist insbesondere bei niedriger Geschwindigkeit der Teilnehmerstation vorteilhaft. Die Meßergebnisse werden beispielsweise gemittelt oder einzeln an die Basisstation BS übertragen.

Im folgenden wird die Erfindung anhand eines Ausführungsbeispiels bezugnehmend auf zeichnerische Darstellungen näher erläutert.

Dabei zeigen

FIG 1 ein Blockschaltbild eines Mobilfunknetzes,

FIG 2 Blockschaltbilder von Basisstation und Teilnehmer-station,

FIG 3 ein Blockschaltbild der Antenneneinrichtung und der Basisstation,

FIG 4 ein Blockschaltbild eines Strahlformungsnetzwerks,

FIG 5 ein Ablaufdiagramm für die Strahlformung, und

FIG 6 ein Beispiel einer Strahlformung unter Einbeziehung der Orthogonalitätsfaktoren.

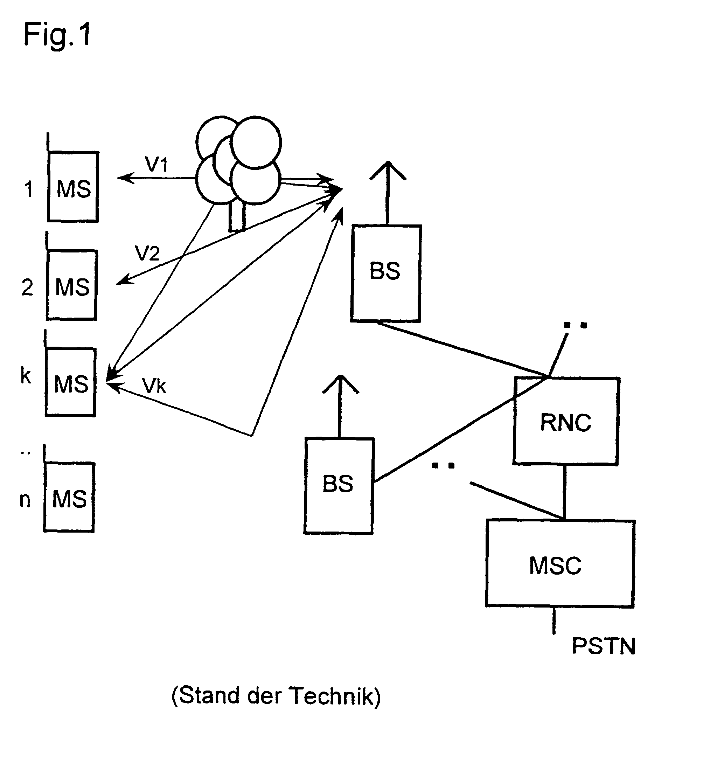

Das in FIG 1 dargestellte Funk-Kommunikationssystem entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einer Einrichtung zur Zuteilung funktechnischer Ressourcen RNC verbunden. Jede Einrichtung zur Zuteilung funktechnischer Ressourcen RNC ermöglicht wiederum eine Verbindung zu zumindest einer Basisstation BS. Eine solche Basisstation BS kann über eine Funkschnittstelle Kommunikationsbeziehungen zu Teilnehmerstationen MS aufbauen.

In FIG 1 sind beispielhaft Verbindungen V1, V2, Vk zur Übertragung von Nutzinformationen und Signalisierungsinformationen zwischen Teilnehmerstationen MS1, MS2, MSk, MSn und einer Basisstation BS dargestellt. Ein Operations- und Wartungszentrum, in FIG 1 nicht dargestellt, realisiert Kontroll- und Wartungsfunktionen für das Mobilfunknetz bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

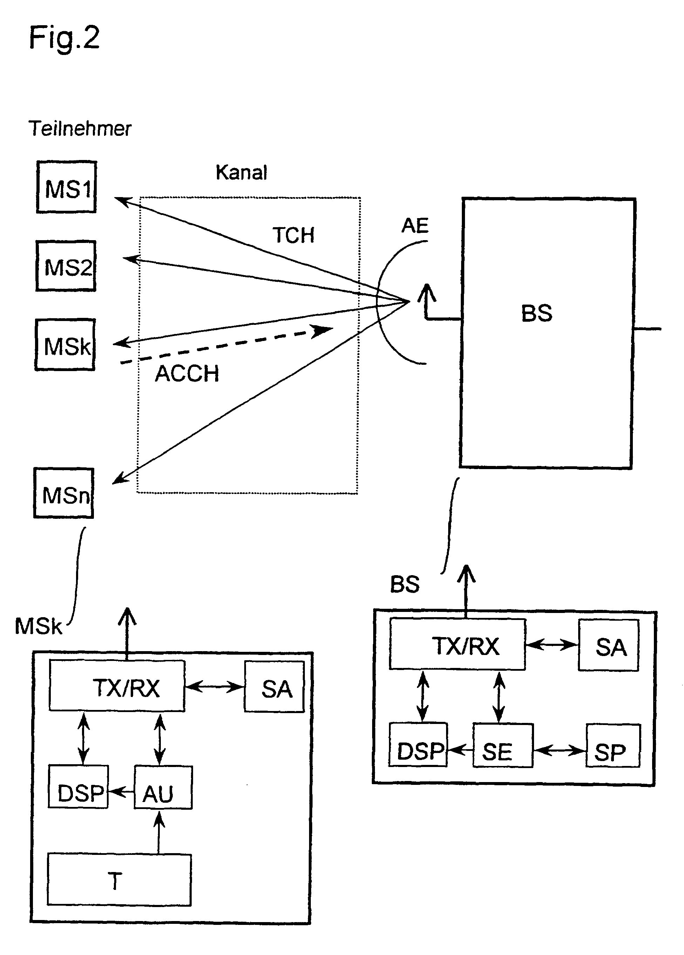

FIG 2 zeigt die Funkübertragung in Abwärtsrichtung von der Basisstation BS zu Teilnehmerstationen MSk, MS1 bis MSn in einem Frequenzkanal TCH zur Datenübertragung. Die Teilnehmerstationen MSk, MS1 bis MSn bestimmen zuerst einen oder mehrere Pilotkanäle mit einer ausreichend hohen oder maximalen Empfangsleistung. Dies sind in der Regel die Pilotkanäle der nächstliegenden Basisstationen BS, in deren Nähe sich die Teilnehmerstation MS momentan befindet. Somit entsteht die Zuordnung von Basisstation BS der aktuellen Funkzelle und der Teilnehmerstation MSk.

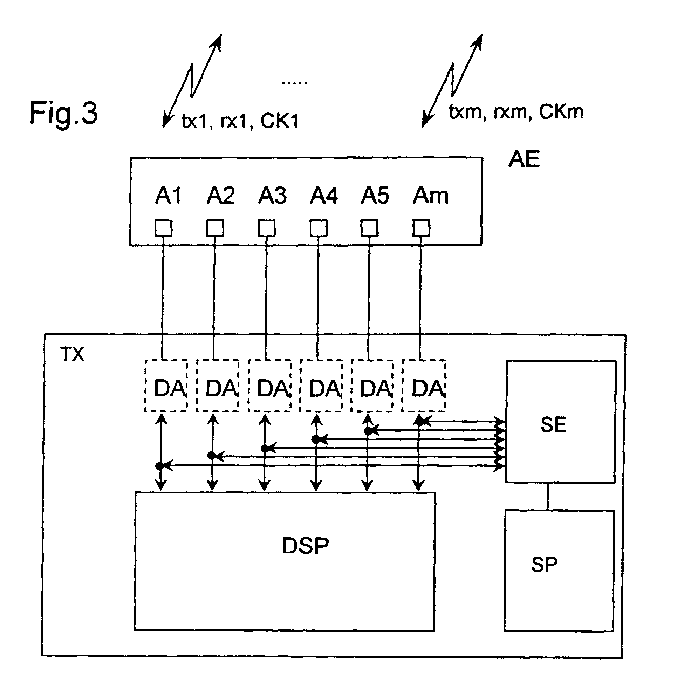

Die Basisstation BS enthält eine Sende/Empfangseinrichtung TX/RX, die abzustrahlende Sendesignale digital/analog wandelt, vom Basisband in den Frequenzbereich der Abstahlung umsetzt und Sendesignale moduliert und verstärkt. Eine Signalerzeugungseinrichtung SA hat zuvor die Sendesignale beispielsweise in Funkblöcken zusammengestellt und dem entsprechenden Frequenzkanal TCH zugeordnet. Mit Antennenelementen A1 bis Am der Antenneneinrichtung AE, wie folgend in der FIG 3 dargestellt, werden charakteristische Kodes CK1 bis CKm von der Sende/Empfangseinrichtung TX/RX gesendet. Eine Signalverarbeitungseinrichtung DSP wertet über die Sende-/Empfangseinrichtung TX/RX empfangene Empfangssignale aus und führt eine Kanalschätzung durch.

Zur Signalverarbeitung werden die Empfangssignale in Symbole mit diskretem Wertevorrat umgewandelt, beispielsweise digitalisiert. Eine Signalverarbeitungseinrichtung DSP enthält einen digitalen Signalprozessor zum Detektieren der Nutzinformationen und der Signalisierungsinformationen. Das Zusammenwirken der Komponenten wird durch eine Steuereinrichtung SE gesteuert. Die zur räumlichen Teilnehmerseparierung mittels der zugeordneten Antenneneinrichtung AE benötigten Daten werden in einer Speichereinrichtung SP gespeichert.

Die Teilnehmerstation MSk enthält entsprechend adaptiert die für die Basisstation BS erläuterten Baugruppen und zusätzlich eine Auswerteeinrichtung AU und ein Bedienfeld T. Am Bedienfeld T kann der Teilnehmer Eingaben vornehmen, u.a. eine Eingabe zum Aktivieren der Teilnehmerstation MS oder zum Verbindungsaufbau einer Verbindung Vk zur Basisstation BS. Die Auswerteeinrichtung AU wertet in Abwärtsrichtung gesendeten und von der Teilnehmerstation MSk empfangenen Signale aus. Neben der Empfangsleistung bzw. dem vorliegenden momentanen Signal/Stör-Verhältnis und den Orthogonalitätsfaktoren $\alpha 1(k)$ bis $\alpha n(k)$ wird die räumliche Kovarianzmatrix $R_{xx}^{K}$ bestimmt. Die räumliche Kovarianzmatix $R_{xx}^{K}$ ist eine M x M Matrix und wird durch

$$R_{xx}^{k} = \sum_{n=1}^{N} E\left\{h_{n} h_{n}^{H}\right\}$$

bestimmt, wobei N die Gesamtzahl der RAKE-Finger ist und $h_{n} \in C^{M}$ beinhaltet die Kanalschätzungen für die Antennenelemente A1 bis Am. E bezeichnet den Erwartungswert und H indiziert komplex konjugiert transponiert. Mit einer Signalisierung durch die Signalverarbeitungseinrichtung DSP zur Basisstation BS in einem Signalisierungskanal ACCH werden u.a. die Kovarianzmatrix $R_{xx}^{(K)}$ und die Orthogonalitätsfaktoren $\alpha 1(k)$ bis $\alpha n$ (k) an die Basisstation BS übertragen.

Die durch mindestens einen Kanalschätzer beispielsweise nach einer Gauß-Markov- oder einer Maximum-Likelihood-Schätzung basierend auf den Trainingssequenzen tseq1 bis tseqn bestimmten Kanalimpulsantworten h und die empfangenen digitale Datensymbole werden einem Schätzer, der beispielsweise in der Signalverarbeitungseinrichtung DSP enthalten ist, zugeführt. Weiterhin erhält die Auswerteeinrichtung AU charakteristische Kodes CK1 bis CKm der einzelnen Antennenelemente A1 bis Am, die Kanalimpulsantworten h und die empfangenen digitalen Datensymbole zur Bestimmung der räumlichen Kovarianzmatrix $R_{xx}^{(K)}$ für eine k-te Verbindung Vk.

Es schließt sich optional eine Mittelung der Werte über mehrere Funkblöcke entsprechend eines rechteckigen oder exponentiellen Fensters an.

In FIG 3 ist die Basisstation BS mit zugeordneten Antennenelementen A1 bis Am der Antenneneinrichtung AE dargestellt. Diese Antenneneinrichtung AE ist der Basisstation BS zugeordnet und empfängt von den sendenden Teilnehmerstationen MS des Mobilfunknetzes Empfangssignale rx bzw. sendet zu den empfangenden Teilnehmerstationen MS Sendesignale tx.

Die Antennenelemente A1 bis Am bilden eine Antenneneinrichtung AE, die als intelligente Antenneneinrichtung ausgebildet ist, d.h. mehrere Antennenelemente A1 bis Am dieser intelligenten Antenneneinrichtung AE empfangen zum gleichen Zeitpunkt Empfangssignale rx bzw. senden Sendesignale tx. Die Signale können derartig miteinander kombiniert werden, daß die Übertragungsqualität gegenüber Systemen mit einer Empfangsantenne verbessert wird und eine die Kapazität steigernde räumliche Auflösung möglich ist.

Im Sendefall werden aus digitalen Signalen mit einem Digital/Analogwandler DA Sendesignale tx erzeugt und von den Antennenelementen A1 bis Am abgestrahlt. Zusätzlich wird von jedem Antennenelement A1 bis Am ein charakteristische Kode CK1 bis CKm gleichzeitig oder zeitlich versetzt abgestrahlt, um eine empfangseitige Bestimmung einer oder mehrerer, beispielsweise je RAKE-Finger eine, räumlichen Kovarianzmatrix $R_{xx}^{(K)}$ mit nur einer Antenne zu ermöglichen.

Zur Formung der Sendekeulen werden die von den Teilnehmerstationen MSk, MSI bis MSn ermittelten

räumlichen Kovarianzmatrizen $R^{(K)}$, $R^{(I)}$ bis $R^{(n)}$ sowie die Orthogonalitätsfaktoren $\alpha 1(k)_{xx}$ bis $\alpha n(k)_{xx}$ in der Signalverarbeitungseinrichtung DSP ausgewertet. Mit den Ergebnissen der Auswertung werden die Sendekeulen mit Hilfe der Steuerungseinrichtung SE ausgerichtet und ggf. in der Speichereinrichtung SP zwischengespeichert.

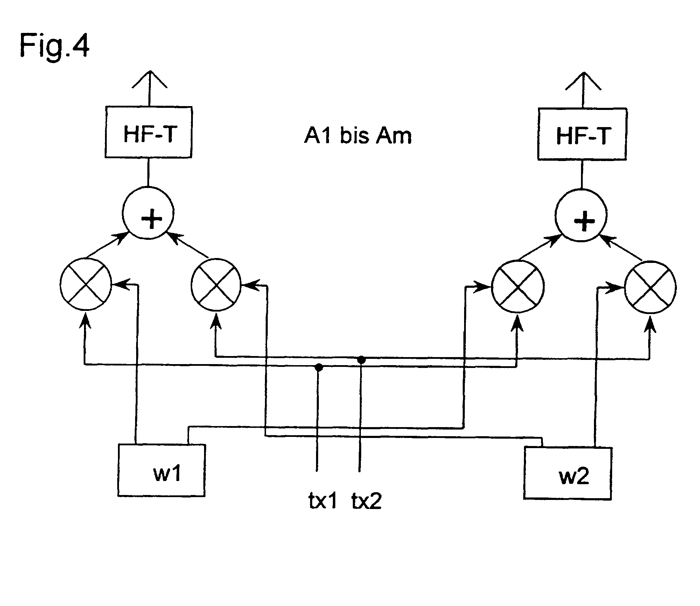

Ein Netzwerk zur Strahlformung ist in Fig. 4 beispielhaft für zwei Verbindungen mit Sendesignalen tx1 und tx2 gezeigt. Den Verbindungen sind Strahlformungsvektoren w1 und w2 zugeordnet, die mit den Sendesignalen tx1 und tx2 multipliziert werden, wobei für jeden Einzelstrahler die gewichteten Sendesignale tx1 und tx2 überlagert, in einem HF-Teil HF-T in hochfrequente Sendesignale umgewandelt und anschließend über M Einzelstrahler abgestrahlt werden. Die Sendesignale tx1 und tx2 werden im gleichen Frequenzkanal (gleiche Sendefrequenz, ggf. Code und/oder Zeitschlitz) übertragen und werden lediglich räumlich separiert.

Durch die Anwendung verschiedener Strahlformungsvektoren w1, w2 für die unterschiedlichen Verbindungen wird eine Abstrahlungscharakteristik der Antenneneinrichtung AE erzeugt, die einen ungestörten Empfang der Sendesignale tx1, tx2 an den entsprechenden Positionen der Teilnehmerstationen MS1, MSk gewährleistet.

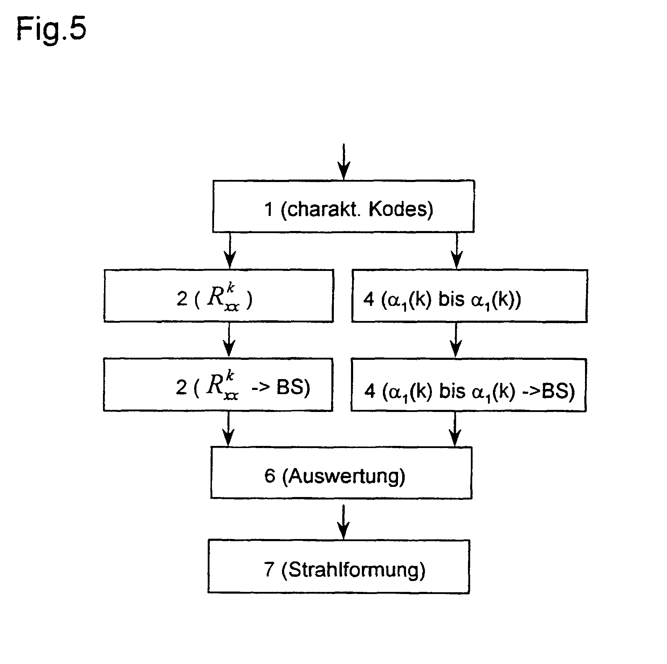

In FIG 5 ist ein Ausführungsbeispiel des erfindungsgemäßen Verfahrens dargestellt:

Im Schritt 1 werden von der Basisstation BS Nutz- und/oder Signalisierungsdaten, Trainingssequenzen und charakteristische Kodes CK über die einzelnen Antennenelemente A1 bis Am der Antenneneinrichtung AE an die Teilnehmerstation MS gesendet.

Im Schritt 2 werden von jeder Teilnehmerstation MSk, MSI bis MSn räumliche Kovarianzmatrizen $R^{(K)}$, $R^{(I)}$ bis $R^{(n)}$ bestimmt. Die Größe der räumlichen Kovarianzmatrizen $R^{(K)}_{xx}$, $R^{(I)}_{xx}$ bis $R^{(n)}_{xx}$ und der charakteristischen Kodes CK werden von der Basisstation BS konfiguriert. Die Konfiguration erfolgt beispielsweise anhand der Funkverkehrslast in der Funkzelle der Basisstation BS. Sind beispielsweise nur wenige Teilnehmerstationen in der Funkzelle anwesend, ist bereits eine grobe Ausrichtung der Sendekeulen ausreichend. Folglich kann die Anzahl der charakteristischen Kodes CK verringert werden.

Im Schritt 3 werden die Kovarianzmatrizen $R^{(K)}_{xx}$ $R^{(I)}_{xx}$ bis $R^{(n)}_{xx}$ mit einer Signalisierung an die Basisstation BS übertragen.

Im Schritt 4 bestimmt jede Teilnehmerstation MSk, MS1 bis MSn Orthogonalitätsfaktoren, die proportional zur Orthogonalität der interferierenden Signale innerhalb der Funkzelle sind. Zusätzlich wird eine Interzell-Interferenz und eine Signallaufzeit von der Basisstation BS zur Teilnehmerstation MS gemessen und im Schritt 5 die Orthogonalitätsfaktoren, die Intrazell-Interferenz, die Interzell-Interferenz und die Signallaufzeit mit einer Signalisierung an die Basisstation BS übertragen.

Die in Schritt 3 und Schritt 5 übertragenen Daten, bzw. Meßergebnisse werden vor der Übertragung komprimiert um in der Basisstation de-komprimiert zu werden. Die räumlichen Kovarianzmatrizen $R^{(K)}_{xx}$, $R^{(I)}_{xx}$ bis $R^{(n)}_{xx}$ werden hierzu beispielsweise mit einer Toeplitz Struktur angenähert.

Im Schritt 6 werden die übertragenen Daten, bzw. Meßergebnisse ausgewertet. Mit den Orthogonalitätsfaktoren, den Intrazell-Interferenzen, den Interzell-Interferenzen und den Signallaufzeiten werden die räumlichen Kovarianzmatrizen $R^{(K)}_{xx}$, $R^{(I)}_{xx}$ bis $R^{(n)}_{xx}$ der einzelnen Teilnehmerstationen MSk, MSl bis MSn gewichtet. Beispielsweise werden Teilnehmerstationen MS, deren Störung vornehmlich durch Interzell-Interferenzen gegeben ist, nicht mit in die Strahlformung mit einbezogen. Dies ist daher vorteilhaft, da Strahlformung vorrangig Intrazell-Interferenzen vermindert.

In Schritt 7 wird für die k-te Verbindung ein Strahlformungsvektor $w^{(k)}$ gemäß der Gleichung:

$$\left|\frac{w^{(k)} R_{xx}^{(k)} w^{(k)}}{w^{(k)} R_{I}^{(k)} w^{(k)}}\right|_{\mathbf{max}}$$

berechnet, wobei $w^{(k)}$ den verallgemeinerten Eigenvektor zum größten verallgemeinerten Eigenwert $\lambda^{(k)}_{max}$ nach

$$R_{xx}^{(k)} w^{(k)} = R_I^{(k)} w^{(k)} \lambda_{\max}^{(k)}$$

bezeichnet. Dies entspricht einem allgemeinen Eigenwertproblem. Die Berechnung erfolgt ohne Iterationen.

Eine Sendeleistung für die Sendesignale tx der Verbindung k wird aus dem Strahlformungsvektor $w^{(k)}$ gemäß der Beziehung $P_k = w^{(k)H} w^{(k)}$ bestimmt, wobei H einen transjugierten Vektor bezeichnet.

Im Schritt 7 von FIG 5 wird zusätzlich überprüft, ob bei der Mobilstation MSk ein ausreichender Signal/Stör-Abstand vorliegt. Ist dies nicht der Fall, so wird die Sendeleistung $P_k$ zusätzlich auf einen vorgegebenen minimalen Signal/Stör-Abstand bei der Funkstation angehoben.

Daraufhin werden Sendesignale für die Verbindung mit dem Strahlformungsvektor $w^{(k)}$ gewichtet und den Antennenelementen zur Abstrahlung zugeführt.

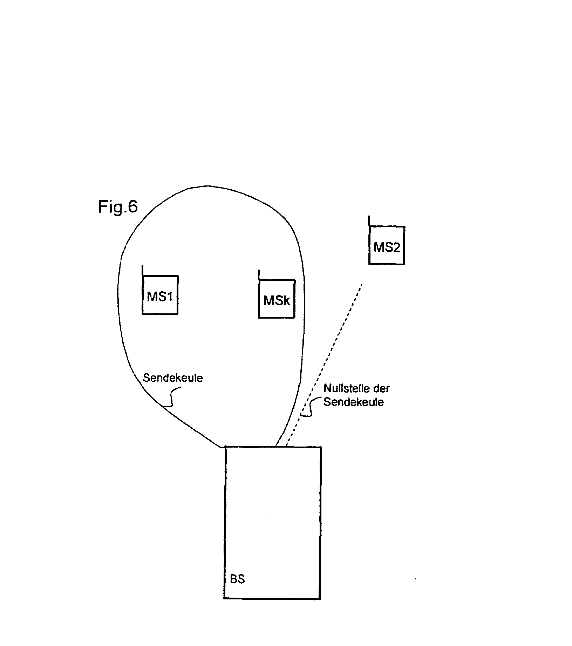

In FIG 6 ist beispielhaft ein Strahlformung unter Einbeziehung der Orthogonalitätsfaktoren dargestellt.

In diesem Szenario besteht eine Kommunikationsbeziehung zu den Teilnehmerstationen MS1, MS2 und MSk. Mit dem erfindungsgemäßen Verfahren soll nun eine Sendekeule für die Teilnehmerstation MSk ausgerichtet werden. Vor der Ausrichtung der Sendekeule werden die Signale für die Teilnehmerstation MSk auch von der Teilnehmerstationen MS1 und MS2 empfangen. Die Teilnehmerstation MS1 ist beispielsweise in Sichtweite der Basisstation BS, so daß die Signale für die Teilnehmerstation MSk zu den Signalen für die Teilnehmerstation MS1 von der Teilnehmerstation MS1 orthogonal empfangen werden. Daher brauchen die Signale nicht räumliche separiert werden und auch die Teilnehmerstation MS1 kann von der Sendekeule der Signale für die Teilnehmerstation MSk erfaßt werden.

Die Teilnehmerstation MS2 ist dagegen nicht in Sichtweite zur Basisstation BS und es wird angenommen, daß die Signale zur Teilnehmerstation MSk und zur Teilnehmerstation MS2 nichtorthogonal sind und ohne räumliche Teilnehmerseparierung zu einer starken Störung der Teilnehmerstation MS 2 führen. Daher wird die Sendekeule der Signale der Teilenehmerstation MSk so ausgerichtet, daß eine Nullstelle der Sendekeule in die Richtung der Teilnehmerstation MS2 weist und die Störung damit minimiert wird.

## Patentansprüche

1. Verfahren zur Strahlformung in einem Funk-Kommunikationssystem mit Teilnehmerstationen (MSk, MS1 bis MSn) und einer Basisstation (BS), die eine Antenneneinrichtung (AE) mit mehreren Antennenelementen (A1 bis Am) aufweist, bei dem
Orthogonalitätsfaktoren ($\alpha$1(k) bis $\alpha$n(k)) von interferierenden Signalen (sig1 bis sign) weiterer Teilnehmerstationen (MS1 bis MSn) zu Signalen (sigk) einer k-ten Verbindung (Vk) von der Basisstation (BS) zu einer Teilnehmerstation (MSk) bestimmt werden,
räumliche Kovarianzmatrizen ($R_{xx}^{K}$, $R_{xx}^{I}$ bis $R_{xx}^{n}$) für die k-te Verbindung (Vk) bzw. für die weiteren Teilnehmerstationen (MS1 bis MSn) bestimmt werden,
die räumlichen Kovarianzmatrizen ($R_{xx}^{I}$ bis $R_{xx}^{n}$) für die weiteren Teilnehmerstationen (MS1 bis MSn) mit den Orthogonalitätsfaktoren ($\alpha$1(k) bis $\alpha$n(k)) gewichtet werden,
für die Verbindung (Vk) ein Strahlformungsvektor ($w^{(k)}$) aus den Kovarianzmatrizen ($R_{xx}^{K}$, $R_{xx}^{I}$ bis $R_{xx}^{n}$) bestimmt wird, und Sendesignale (tx$^{(k)}$) für die Verbindung (Vk) mit dem Strahlformungsvektor ($w^{(k)}$) gewichtet und den Antennenelementen (A1 bis Am) zugeführt werden.

2. Verfahren nach Anspruch 1, bei dem
aus den mit den Orthogonalitätsfaktoren ($\alpha$1(k) bis $\alpha$n(k)) gewichteten Kovarianzmatrizen ($R_1$ bis $R_n$) eine resultierende Kovarianzmatrix ($R_I$) der interferierenden Signale (sig1 bis sign) nach

$$R_I^{(k)} = \sum_{i=1, i \neq k}^{n} \alpha_{k,i} \cdot R_{xx}^{(i)}$$

bestimmt wird.

3. Verfahren nach einem der vorhergehenden Ansprüche, bei dem zusätzlich mindestens ein Faktor ($\beta$) für eine Interzell-Interferenz (II) für die k-te Verbindung (Vk) bestimmt wird, und
mit dem Faktor ($\beta$) die Kovarianzmatrizen ($R_{xx}^{I}$ bis $R_{xx}^{n}$) zusätzlich gewichtet werden.

4. Verfahren nach einem der vorhergehenden Ansprüche, bei dem der Strahlformungsvektor ($w^{(k)}$) gemäß der Bedingung

$$\left| \frac{w^{(k)H} R_{xx}^{(k)} w^{(k)}}{w^{(k)H} R_I^{(k)} w^{(k)}} \right|_{max}$$

mit dem größten Eigenwert ($\lambda_{max}^{(k}$ nach

$$R_{xx}^{(k)} w^{(k)} = R_I^{(k)} w^{(k)} \lambda_{max}^{(k)}$$

bestimmt wird.

5. Verfahren nach einem der vorhergehenden Ansprüche, bei dem von mehreren Antennenelementen (A1 bis Am) charakteristische Kodes (CK) gesendet werden, und
von den Teilnehmerstationen (MSk, MS1 bis MSn) unter Auswertung der charakteristischen Kodes (CK) die Kovarianzmatrizen ($R_{xx}^{K}$, $R_{xx}^{I}$ bis $R_{xx}^{n}$) bestimmt werden.

6. Verfahren nach Anspruch 5, bei dem
die räumliche Kovarianzmatrix ($R_{xx}^{K}$, $R_{xx}^{I}$ bis $R_{xx}^{n}$) und die Orthogonalitätsfaktoren ($\alpha$1(k) bis $\alpha$n(k)) von der Teilnehmerstation (MSk, MS1 bis MSn) an die Basisstation (BS) übertragen werden.

7. Verfahren nach Anspruch 6, bei dem
von der Teilnehmerstation (MSk, MS1 bis MSn) mehrere Kovarianzmatrizen ($R_{xx}^{K}$, $R_{xx}^{I}$ bis $R_{xx}^{n}$) bezogen auf die Finger eines Rake-Empfängers bestimmt werden.

## Claims

1. Method for beam shaping in a radio communication system comprising subscriber stations (MSk, MS1 to MSn) and a base station (BS) which exhibits an antenna device (AE) having a number of antenna elements (A1 to Am), in which
orthogonality factors ($\alpha$1(k) to $\alpha$n(k)) of interfering signals (sig1 to sign) of further subscriber stations (MS1 to MSn) with respect to signals (sigk) of a k-th connection (Vk) from the base station (BS) to a subscriber station (MSk) are determined,
spatial covariance matrixes ($R^k_{xx}$, $R^l_{xx}$ to $R^n_{xx}$) for the k-th connection (Vk) and for the other subscriber stations (MS1 to MSn), respectively, are determined,
the spatial covariance matrixes ($R^l_{xx}$ to $R^n_{xx}$) for the further subscriber stations (MS1 to MSn) are weighted with the orthogonality factors ($\alpha$1 (k) to $\alpha$n (k)),
for the connection (Vk), a beam shaping vector ($w^{(k)}$) is determined from the covariance matrixes ($R^k_{xx}$, $R^l_{xx}$ to $R^n_{xx}$), and transmit signals ($tx^{(k)}$) for the connection (Vk) are weighted with the beam shaping vector ($w^{(k)}$) and supplied to the antenna elements (A1 to Am).

2. Method according to Claim 1, in which a resultant covariance matrix ($R_I$) of the interfering signals (sig1 to sign) is determined from the covariance matrixes ($R_1$ to $R_n$) weighted with the orthogonality factors ($\alpha$1(k) to $\alpha$n(k)), in accordance with

$$R_I^{(k)} = \sum_{i=1, i\neq k}^{n} \alpha_{k,i} \cdot R_{xx}^{(i)}$$

3. Method according to one of the preceding claims, in which in addition at least one factor ($\beta$) for an intercell interference (II) is determined for the k-th connection (Vk), and
the covariance matrixes ($R^l_{xx}$ to $R^n_{xx}$) are additionally weighted with the factor ($\beta$) .

4. Method according to one of the preceding claims, in which the beam shaping vector ($w^{(k)}$) is determined in accordance with the condition

$$\left| \frac{w^{(k)H} R_{xx}^{(k)} w^{(k)}}{w^{(k)H} R_I^{(k)} w^{(k)}} \right|_{max}$$

with the largest eigenvalue ($\lambda^{(k)}_{max}$) according to

$$R_{xx}^{(k)} w^{(k)} = R_I^{(k)} w^{(k)} \lambda^{(k)}_{max}$$

5. Method according to one of the preceding claims, in which characteristic codes (CK) are transmitted by a number of antenna elements (Al to Am), and the covariance matrixes ($R^k_{xx}$, $R^l_{xx}$ to $R^n_{xx}$) are determined by the subscriber stations (MSk, MS1 to MSn) by evaluating the characteristic codes (CK).

6. Method according to Claim 5, in which the spatial covariance matrix ($R^k_{xx}$, $R^l_{xx}$ to $R^n_{xx}$) and the orthogonality factors ($\alpha$1(k) to $\alpha$n(k)) are transmitted from the subscriber station (MSk, MS1 to MSn) to the base station (BS).

7. Method according to Claim 6, in which a number of covariance matrixes ($R^k_{xx}$, $R^l_{xx}$ to $R^n_{xx}$) are determined referred to the fingers of a rake receiver by the subscriber station (MSk, MS1 to MSn).

**Revendications**

1. Procédé pour la formation d'un faisceau dans un système de communication radio comprenant des stations d'abonnés (MSk, MS1 à MSn) et une station de base (BS) qui présente un dispositif d'antenne (AE) avec plusieurs éléments d'antenne (A1 à Am),
dans lequel
des facteurs d'orthogonalité ($\alpha$1 (k) à $\alpha$n (k) ) de signaux interférants (sig1 à sign) de stations d'abonnés supplémentaires (MS1 à MSn) sont déterminés pour des signaux (sigk) d'une k-ième liaison (Vk) de la station de base (BS) vers une station d'abonnés (MSk),
des matrices spatiales des covariances ($R^K_{xx}$, $R^l_{xx}$ à $R^n_{xx}$) sont déterminées pour la k-ième liaison (Vk) resp. pour les stations d'abonnés supplémentaires (MS1 à MSn),
les matrices spatiales des covariances ($R^l_{xx}$ à $R^n_{xx}$) pour les stations d'abonnés supplémentaires (MS1 à MSn) sont pondérées avec les facteurs d'orthogonalité ($\alpha$1 (k) à $\alpha$n (k) ),
un vecteur de formation de faisceau ($w^{(k)}$) constitué des matrices des covariances ($R^K_{xx}$, $R^l_{xx}$ à $R^n_{xx}$) est déterminé pour la liaison (Vk), et des signaux d'émission ($tx^{(k)}$) sont pondérés pour la liaison (Vk) avec le vecteur de formation de faisceau ($w^{(k)}$) et amenés aux éléments d'antenne (A1 à Am).

2. Procédé selon la revendication 1, dans lequel, à partir des matrices des covariances ($R_1$ à $R_n$) pondérées avec les facteurs d'orthogonalité ($\alpha$1 (k) à $\alpha$n (k) ), une matrice des covariances ($R_I$) résultant des signaux interférants (sig1 à sign) est déterminée suivant

$$R_I^{(k)} = \sum_{i=1, i\neq k}^{n} \alpha_{k,i} \cdot R_{xx}^{(i)}$$

3. Procédé selon l'une quelconque des revendications précédentes, dans lequel au moins un facteur ($\beta$) est déterminé en plus pour une interférence d'intercellules (II) pour la k-ième liaison (Vk), et

les matrices des covariances ($R_{xx}^{l}$ à $R_{xx}^{n}$) sont pondérées en plus avec le facteur ($\beta$).

4. Procédé selon l'une quelconque des revendications précédentes, dans lequel le vecteur de formation de faisceau ($w^{(k)}$) suivant la condition

$$\left| \frac{w^{(k)H} R_{xx}^{(k)} w^{(k)}}{w^{(k)H} R_{I}^{(k)} w^{(k)}} \right|_{max}$$

est déterminé avec la plus grande valeur propre ($\lambda_{max}^{(k)}$ suivant

$$R_{xx}^{(k)} w^{(k)} = R_{I}^{(k)} w^{(k)} \lambda_{max}^{(k)}.$$

5. Procédé selon l'une quelconque des revendications précédentes, dans lequel
des codes caractéristiques (CK) sont émis par plusieurs éléments d'antenne (A1 à Am), et
les matrices des covariances ($R_{xx}^{K}, R_{xx}^{l}$ à $R_{xx}^{n}$) sont déterminées par les stations d'abonnés (MSk, MS1 à MSn) par évaluation des codes caractéristiques (CK).

6. Procédé selon la revendication 5, dans lequel
la matrice spatiale des covariances ($R_{xx}^{K}, R_{xx}^{l}$ à $R_{xx}^{n}$) et les facteurs d'orthogonalité ($\alpha$1 (k) à $\alpha$n (k) ) sont transmis par la station d'abonnés (MSk, MS1 à MSn) à la station de base (BS).

7. Procédé selon la revendication 6, dans lequel
plusieurs matrices des covariances ($R_{xx}^{K}, R_{xx}^{l}$ à $R_{xx}^{n}$) sont déterminées par la station d'abonnés (MSk, MS1 à MSn) en ce qui concerne les doigts d'un récepteur en râteau.

Fig.1

(Stand der Technik)

# Fig.2

Fig.3

..... tx1, rx1, CK1       txm, rxm, CKm

AE

| A1 | A2 | A3 | A4 | A5 | Am |

TX

DA DA DA DA DA DA

SE

DSP

SP

Fig.4

A1 bis Am

# Fig.5

```
                    ↓
        ┌─────────────────────────┐
        │   1 (charakt. Kodes)    │
        └─────────────────────────┘
          ↓                     ↓
┌──────────────────┐   ┌──────────────────────────┐
│   2 ( $R_{xx}^{k}$ )   │   │ 4 (α₁(k) bis α₁(k))      │
└──────────────────┘   └──────────────────────────┘
          ↓                     ↓
┌──────────────────┐   ┌──────────────────────────┐
│ 2 ( $R_{xx}^{k}$ -> BS) │   │ 4 (α₁(k) bis α₁(k) ->BS) │
└──────────────────┘   └──────────────────────────┘
          ↓                     ↓
        ┌─────────────────────────┐
        │    6 (Auswertung)       │
        └─────────────────────────┘
                    ↓
        ┌─────────────────────────┐
        │   7 (Strahlformung)     │
        └─────────────────────────┘
```

Fig.6

MS1

MSk

MS2

Sendekeule

Nullstelle der
Sendekeule

BS